# EUROPEAN PATENT APPLICATION

(11) **EP 4 708 764 A1**
(43) Date of publication of application: **11.03.2026**
(21) Application number: 25195323.8
(22) Date of filing: 12.08.2025
(51) Int. Cl.: H04L 9/08, H04L 9/32

(54) **FINANCIAL CERTIFICATE AND FINANCIAL KEY DOWNLOAD METHOD AND SYSTEM**

(30) Priority: 03.09.2024 CN 202411227213
(71) Applicant: FUJIAN WISBO DIGITAL TECHNOLOGY Co. Ltd., Xiamen Fujian 361000 (CN)
(72) Inventor: Huang, Hui, Xiamen City, Fujian Province (CN)
(74) Representative: Dall'Olio, Christian

(57) **Abstract**

The present invention discloses a financial certificate and financial key download method and system. The method comprises: performing a session key negotiation between a key distribution host end and a key receiving device end using an ECDH key negotiation algorithm to obtain a first session key; sending, via the key receiving device end, a financial certificate download request to the key distribution host end; generating, via the key distribution host end, a financial certificate , and sending to the key receiving device end; performing a session key negotiation between the key distribution host end and the key receiving device end based on the financial certificate again to obtain a second session key; sending, via the key receiving device end, a financial key download request to the key distribution host end; and generating, via the key distribution host end, a financial key, and sending to the key receiving device end.

## Description

### Technical Field

The present invention relates to the technical field of information security, particularly to a financial certificate and financial key download method and system.

### Background Art

Point of sale (POS) machines are used more and more widely, and it is necessary to ensure the security of data transmission in the financial transaction process. An existing financial certificate download, namely, a private data download, is to generate a private key and a certificate by a key distribution host (KDH), and after a public key is issued by a certificate authority (CA), the KDH downloads the private key and the certificate to the key receiving device (KRD) via a one-way authentication (namely, KRD authenticates the KDH) protocol. The existing way to download the financial key is to generate the temporary session key through the RSA2048 algorithm (an asymmetric encryption algorithm). At present, the existing financial certificate and financial key download method is not secure enough. After a POS device is produced and delivered by the manufacturer, a financial institution is required to inject a master key and a working key (financial keys) into the POS device. The master key and the working key enable the POS device to perform secure authentication and complete transaction processes. During the injection of the financial keys, the key distribution host end is also required to undergo authentication by a certificate cuthority (CA), typically the UnionPay center, to verify the legitimacy of its identity.

### Summary of the Invention

The technical problem to be solved by the present invention is to provide a financial certificate and financial key download method and system, which can improve the security of the financial certificate and financial key download.

In order to solve the above technical problems, the present invention adopts the following technical solution:
a financial certificate and financial key download method, including the following steps:
performing a session key negotiation between a key distribution host end and a key receiving device end using an Elliptic Curve Diffie-Hellman (ECDH) key negotiation algorithm to obtain a first session key so as to establish a financial security channel between the key distribution host end and the key receiving device end;
sending, via the key receiving device end, a financial certificate download request to the key distribution host end based on the first session key;
generating, via the key distribution host end, a financial certificate based on the financial certificate download request, and sending the financial certificate to the key receiving device end;
performing a session key negotiation between the key distribution host end and the key receiving device end using the ECDH key negotiation algorithm based on the financial certificate to obtain a second session key so as to establish a financial secure channel between the key distribution host end and the key receiving device end;
sending, via the key receiving device end, a financial key download request to the key distribution host end based on the second session key and the financial certificate; and generating, via the key distribution host end, a financial key based on the financial key download request, and sending the financial key to the key receiving device end.

In order to solve the above technical problems, the present invention adopts another technical solution:
A financial certificate and financial key download system, including a key distribution host end and a key receiving device end, wherein the key distribution host end includes a first memory, a first processor, and a first computer program stored in the first memory and operable on the first processor, and the key receiving device end includes a second memory, a second processor and a second computer program stored in the second memory and operable on the second processor, wherein the first processor, when executing the first computer program, realizes the steps executed by the key distribution host end in the financial certificate and financial key download method described above; and
the second processor, when executing the second computer program, realizes the steps executed by the key receiving device end in the financial certificate and financial key download method described above.

The advantageous effect of the present invention is that by performing a session key negotiation between a key distribution host end and a key receiving device end using an ECDH key negotiation algorithm to obtain a first session key so as to establish a financial security channel between the two; sending, via the key receiving device end, a financial certificate download request to the key distribution host end based on the first session key; generating, via the key distribution host end, a financial certificate based on the financial certificate download request, and sending the financial certificate to the key receiving device end; performing a session key negotiation between the key distribution host end and the key receiving device end again based on the financial certificate to obtain a second session key so as to establish a financial secure channel between the two; sending, via the key receiving device end, a financial key download request to the key distribution host end based on the second session key and the financial certificate; and generating, via the key distribution host end, a financial key based on the financial key download request, and sending the financial key to the key receiving device end, thereby establishing financial security channels between the key distribution host end and the key receiving device end twice through the ECDH key negotiation algorithm, so as to realize two-way authentication before the financial certificate and the financial key are downloaded; and then subsequent financial certificate download and financial key download can be performed based on the session key obtained by establishing a secure channel, thereby improving the security of the financial certificate and financial key download.

### Brief Description of the Drawings

FIG 1 is a flowchart of the steps of a financial certificate and financial key download method according to an embodiment of the present invention; and
FIG 2 is a structural schematic diagram of a financial certificate and financial key download system according to an embodiment of the present invention.

### Detailed Description of the Invention

To provide a detailed explanation of the technical content, achieved objectives, and effects of the present invention, the following will be described in conjunction with the embodiments and accompanying drawings.

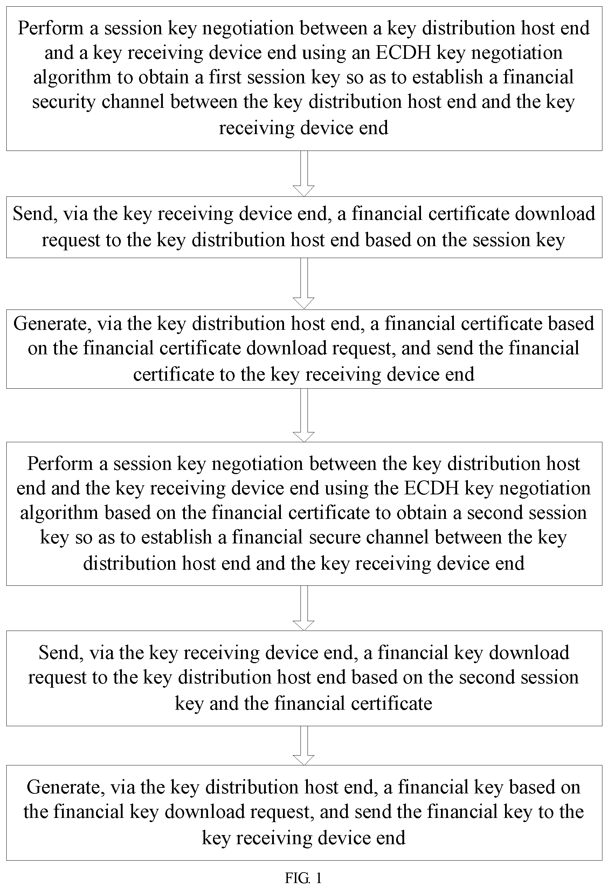

Referring to FIG 1, a financial certificate and financial key download method includes the following steps:
performing a session key negotiation between a key distribution host end and a key receiving device end using an ECDH key negotiation algorithm to obtain a first session key so as to establish a financial security channel between the key distribution host end and the key receiving device end;
sending, via the key receiving device end, a financial certificate download request to the key distribution host end based on the session key;
generating, via the key distribution host end, a financial certificate based on the financial certificate download request, and sending the financial certificate to the key receiving device end;
performing a session key negotiation between the key distribution host end and the key receiving device end using the ECDH key negotiation algorithm based on the financial certificate to obtain a second session key so as to establish a financial secure channel between the key distribution host end and the key receiving device end;
sending, via the key receiving device end, a financial key download request to the key distribution host end based on the second session key and the financial certificate; and generating, via the key distribution host end, a financial key based on the financial key download request, and sending the financial key to the key receiving device end.

As can be seen from the above description, the advantageous effect of the present invention is that by performing a session key negotiation between a key distribution host end and a key receiving device end using an ECDH key negotiation algorithm to obtain a first session key so as to establish a financial security channel between the two; sending, via the key receiving device end, a financial certificate download request to the key distribution host end based on the first session key; generating, via the key distribution host end, a financial certificate based on the financial certificate download request, and sending the financial certificate to the key receiving device end; performing a session key negotiation between the key distribution host end and the key receiving device end again based on the financial certificate to obtain a second session key so as to establish a financial secure channel between the two; sending, via the key receiving device end, a financial key download request to the key distribution host end based on the second session key and the financial certificate; and generating, via the key distribution host end, a financial key based on the financial key download request, and sending the financial key to the key receiving device end, thereby establishing financial security channels between the key distribution host end and the key receiving device end twice through the ECDH key negotiation algorithm, so as to realize two-way authentication before the financial certificate and the financial key are downloaded; and then subsequent financial certificate download and financial key download can be performed based on the session key obtained by establishing a secure channel, thereby improving the security of the financial certificate and financial key download. Further, before the step of performing a session key negotiation between a key distribution host end and a key receiving device end using an ECDH key negotiation algorithm to obtain a first session key, it also includes:
sending, via the key distribution host end, a creation instruction for a certificate signature request file to the key receiving device end;
generating, via the key receiving device end, a first Elliptic Curve Cryptography (ECC) public and private key pair according to the creation instruction;
storing, via the key receiving device end, the first ECC public and private key pair as a temporary variable, and generating a certificate signature request file according to the first ECC public and private key pair;
sending, via the key receiving device end, the certificate signature request file to the key distribution host end;
sending, via the key distribution host end, the certificate signature request file to a certificate authority (CA);
receiving, via the key distribution host end, a digital certificate generated by the CA according to the certificate signature request file, and sending the digital certificate to the key receiving device end; and
obtaining, via the key receiving device end, a signature certificate chain according to the digital certificate, and storing the signature certificate chain as a temporary variable.

It can be seen from the above-mentioned description that the creation instruction for the certificate signature request file is sent by the key distribution host end to a key receiving device end; the certificate signature request file is generated by the key receiving device end according to the creation instruction; and the signature certificate chain is acquired by the key distribution host end using the certificate signature request file so as to facilitate subsequent two-way authentication with the key distribution host end.

Further, the first ECC public and private key pair includes a first ECC private key;
the step of performing a session key negotiation between a key distribution host end and a key receiving device end using an ECDH key negotiation algorithm to obtain a first session key so as to establish a financial security channel between the key distribution host end and the key receiving device end includes:
generating, via the key receiving device end, a first random number, and sending the first random number to the key distribution host end;
saving, via the key distribution host end, the first random number, and generating a second random number;
generating, via the key distribution host end, a first temporary ECC public and private key pair, wherein the first temporary ECC public and private key pair includes a first temporary ECC public key and a first temporary ECC private key;
generating, via the key distribution host end, a first message according to the first temporary ECC public key, a preset signature certificate chain, the first random number, and the second random number, and signing the first message using a signature certificate private key in the preset signature certificate chain so as to obtain a first message signature;
sending, via the key distribution host end, the first message and the first message signature to the key receiving device end;
performing, via the key receiving device end, a session key negotiation using the ECDH key negotiation algorithm based on the first message and the first message signature so as to obtain a first key receiving device end session key;
acquiring, via the key receiving device end, the temporary certificate chain, and calculating a first key check value using the first key receiving device end session key;
generating, via the key receiving device end, a second message according to the second temporary ECC public key, the temporary certificate chain, and the first key check value, and signing the second message using the first ECC private key so as to obtain a second message signature;
sending, via the key receiving device end, the second message, the second random number, and the second message signature to the key distribution host end;
performing, via the key distribution host end, a session key negotiation using the ECDH key negotiation algorithm based on the second random number, the second message, and the second message signature to obtain a first key distribution host end session key;
calculating, via the key distribution host end, a second key check value using the first key distribution host end session key, and comparing the second key check value with the first key check value in the second message, and generating, via the key distribution host end, a first integrated message according to the first random number, the first message, the first message signature, the second message, and the second message signature if the result of the comparison is consistent;
performing, via the key distribution host end, message authentication codes (MAC) calculation on the first integrated message using the first key distribution host end session key to obtain a first MAC result, and sending the first MAC result to the key receiving device end;
generating, via the key receiving device end, a second integrated message according to the first random number, the first message, the first message signature, the second message, and the second message signature, and performing MAC calculation on the second integrated message using the first key receiving device end session key to obtain a second MAC result; and
comparing, via the key receiving device end, the second MAC result with the first MAC result, and determining that the establishment of the financial security channel between the key distribution host end and the key receiving device end is successful if the result of the comparison is consistent.

It can be seen from the above-mentioned description that, using the ECDH key negotiation algorithm to perform session key negotiation, the obtained session key is symmetrical, and the security of data transmission between a subsequent key distribution host end and a key receiving device end can be ensured.

Further, the step of performing, via the key receiving device end, a session key negotiation using the ECDH key negotiation algorithm based on the first message and the first message signature so as to obtain a first key receiving device end session key includes:
performing, via the key receiving device end, a first check on the first random number in the first message, and saving the second random number if the result of the first check is successful;
performing, via the key receiving device end, a second check on the preset signature certificate chain in the first message, performing a third check on the first message signature using the preset signature certificate chain if the result of the second check is successful, and generating a second temporary ECC public and private key pair if the result of the third check is successful, wherein the second temporary ECC public and private key pair includes a second temporary ECC private key and a second temporary ECC public key; and
performing, via the key receiving device end, session key negotiation using the ECDH key negotiation algorithm based on the second temporary ECC private key and the first temporary ECC public key in the first message, so as to obtain the first key receiving device end session key.

It can be seen from the above-mentioned description that the reliability of the received information can be ensured by verifying the first message and the first message signature via the key receiving device end, and the session key negotiation is performed after the verification is successful, so as to achieve more effective authentication on the key distribution host end. Further, the step of performing, via the key distribution host end, a session key negotiation using the ECDH key negotiation algorithm based on the second random number, the second message, and the second message signature to obtain a first key distribution host end session key includes: performing, via the key distribution host end, a first check on the second random number, performing a second check on the second message signature using the temporary certificate chain if the result of the first check is successful, and performing a session key negotiation using the ECDH key negotiation algorithm based on the first temporary ECC private key and the second temporary ECC public key in the second message if the result of the second check is successful, so as to obtain the first key distribution host end session key.

It can be seen from the above-mentioned description that the second random number and the second message sent by the key receiving device end can be verified by the key distribution host end, and after being successful, the session key negotiation is performed using the second message. The key receiving device end is more securely authenticated, so as to ensure the reliability of the two-way authentication.

Further, the step of sending, via the key receiving device end, a financial certificate download request to the key distribution host end based on the session key includes:
generating, via the key receiving device end, a third random number and certificate request configuration information, and generating a financial certificate download request according to the second random number, the third random number, and the certificate request configuration information; and
performing, via the key receiving device end, MAC calculation on the financial certificate download request using the first key receiving device end session key to obtain a third MAC result, and sending the third MAC result to the key distribution host end.

It can be seen from the above-mentioned description that the financial certificate download request is generated by the key receiving device end according to the second random number, the third random number, and the certificate request configuration information, and then MAC calculation on the financial certificate download request is performed using the first key receiving device end session key, so as to ensure that the certificate request configuration information is not easily acquired by others, and improve the security of the financial certificate download.

Further, the step of generating, via the key distribution host end, a financial certificate based on the financial certificate download request, and sending the financial certificate to the key receiving device end includes:
verifying, via the key distribution host end, the second random number in the third MAC result, saving the third random number in the third MAC result if the result of the verification is successful, and generating a financial certificate according to the certificate request configuration information in the third MAC result in a first preset format;
sending, via the key distribution host end, the financial certificate and the third random number to the key receiving device end;
after the step of generating, via the key distribution host end, a financial certificate based on the financial certificate download request, and sending the financial certificate to the key receiving device end, it further includes:
   verifying, via the key receiving device end, the third random number, and saving the financial certificate if the result of the verification is successful.

It can be seen from the above-mentioned description that the financial certificate is generated by the key distribution host end only after successfully verifying the second random number in the third MAC result, and after the key receiving device end receives same, the financial certificate is verified together with the third random number and saved only after the verification is successful, which improves the security of financial certificate generation and download. Further, the step of sending, via the key receiving device end, a financial key download request to the key distribution host end based on the second session key and the financial certificate includes:
generating, via the key receiving device end, a fourth random number;
generating, via the key receiving device end, a financial key download request according to the second random number, the fourth random number, a key identifier (ID) in the financial certificate, and a key system number, and performing MAC calculation on the financial key download request based on the second session key to obtain a fourth MAC result; and
sending, via the key receiving device end, the MAC result to the key distribution host end.

It can be seen from the above-mentioned description that the financial key download request is generated by the key receiving device end according to the second random number, the fourth random number, the key ID in the financial certificate, and the key system number, and MAC calculation on the financial key download request is performed based on the second session key and then sent to the key distribution host end, so as to avoid the financial key basic data being acquired by others, and improve the security of the financial key.

Further, the step of generating, via the key distribution host end, a financial key based on the financial key download request, and sending the financial key to the key receiving device end includes:
verifying, via the key distribution host end, the second random number in the fourth MAC result, saving the fourth random number in the fourth MAC result if the result of the verification is successful, and generating a financial key according to the key ID and a key system number in the fourth MAC result in a second preset format;
sending, via the key distribution host end, the financial key and the fourth random number to the key receiving device end;
after the step of generating, via the key distribution host end, a financial key based on the financial key download request, and sending the financial key to the key receiving device end, it further includes:
   verifying, via the key receiving device end, the fourth random number, and saving the financial key if the result of the verification is successful.

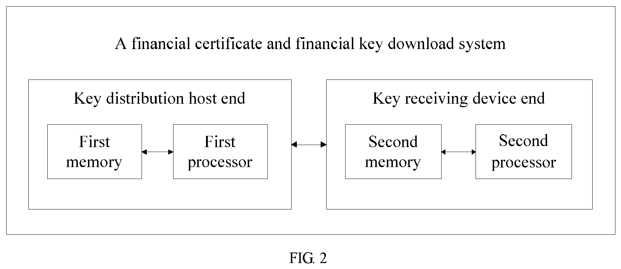

It can be seen from the above-mentioned description that after the fourth MAC result is verified by the key distribution host end, the financial key is generated according to the key ID and the key system number in the fourth MAC result in the second preset format; then, the financial key and the fourth random number are sent to the key receiving device end; the fourth random number is verified by the key receiving device end, and the financial key is saved after the verification is successful, which improves the security of financial key generation and download. With reference to FIG 2, another embodiment of the present invention provides a financial certificate and financial key download system, including a key distribution host end and a key receiving device end, wherein the key distribution host end includes a first memory, a first processor, and a first computer program stored in the first memory and operable on the first processor, and the key receiving device end includes a second memory, a second processor and a second computer program stored in the second memory and operable on the second processor, wherein the first processor, when executing the first computer program, realizes the steps executed by the key distribution host end in the financial certificate and financial key download method described above;
the second processor, when executing the second computer program, realizes the steps executed by the key receiving device end in the financial certificate and financial key download method described above.

The above-described financial certificate and financial key download method and system of the present invention can be applied to commercial device products based on the open source version of the HarmonyOS (OpenHarmony) and the Android system, and will be described below by way of specific embodiments.

Referring to FIG 1, the first embodiment of the present invention is as follows.

A financial certificate and financial key download method, includes the following steps.

S1, a creation instruction for a certificate signature request (CSR) file is sent via the key distribution host end to the key receiving device end.

S2, a first ECC public and private key pair is generated via the key receiving device end according to the creation instruction.

Wherein the first ECC public and private key pair includes a first ECC private key ECC _temp_priKey and a first ECC public key ECC_temp_pubKey.

S3, the first ECC public and private key pair is stored via the key receiving device end as a temporary variable, and a certificate signature request file is generated according to the first ECC public and private key pair.

Wherein the benefit of being stored as a temporary variable is that it can be deleted when used up, and is not permanently retained in memory, saving memory space.

S4, the certificate signature request file is sent via the key receiving device end to the key distribution host end.

S5, the certificate signature request file is sent via the key distribution host end to a certificate authority (CA).

In an alternative embodiment, further included is: the certificate signature request file is verified via the certificate authority (CA), and a digital certificate is generated after the verification is successful.

The submitted CSR file is verified via the certificate authority (CA) to ensure that the applicant has control over the corresponding private key. The identity information about the applicant is also verified. After the verification is passed, the public key in the CSR file is signed via the certificate authority (CA) using its own private key to generate a digital certificate, wherein the certificate contains the public key, the information about the applicant and the digital signature of the CA, etc.

S6, the digital certificate generated by the CA is received via the key distribution host end according to the certificate signature request file, and the digital certificate is sent to the key receiving device end.

S7, a signature certificate chain (CA_Chain_ECC) is obtained via the key receiving device end according to the digital certificate, and the signature certificate chain is stored as a temporary variable.

S8, a session key negotiation is performed between the key distribution host end and the key receiving device end using the ECDH key negotiation algorithm to obtain a first session key so as to establish a financial security channel between the key distribution host end and the key receiving device end, wherein the first session key includes a first key receiving device end session key and a first key distribution host end session key, and the step specifically includes S81-S814.

S81, a first random number is generated via the key receiving device end, and the first random number is sent to the key distribution host end.

S82, the first random number is saved via the key distribution host end, and a second random number is generated.

In an alternative embodiment, when the first random number is sent by the key receiving device end to the key distribution host end, parameters, such as an ECC algorithm suite, an ECC curve list, and a signature block algorithm are also sent to the key distribution host end. When the second random number is generated by the key distribution host end, parameters such as a supported ECC algorithm suite, an ECC curve, and a signature block algorithm are also selected, and then data is generated by using these selected parameters.

S83, a first temporary ECC public and private key pair is generated via the key distribution host end, wherein the first temporary ECC public and private key pair includes a first temporary ECC public key ECC_KDH_temp_pubKey2 and a first temporary ECC private key ECC_KDH_temp_priKey2.

S84, a first message is generated via the key distribution host end according to the first temporary ECC public key, a preset signature certificate chain, the first random number, and the second random number; and the first message is signed using a signature certificate private key in the preset signature certificate chain so as to obtain a first message signature.

Wherein the preset signature certificate chain is a signature certificate chain preset in the key distribution host end in advance.

S85, the first message and the first message signature are sent via the key distribution host end to the key receiving device end.

S86, a session key negotiation is performed via the key receiving device end using the ECDH key negotiation algorithm based on the first message and the first message signature so as to obtain a first key receiving device end session key, and the step specifically includes S861-S863. S861, a first check is performed via the key receiving device end on the first random number in the first message, and the second random number is saved if the result of the first check is successful.

S862, a second check is performed via the key receiving device end on the preset signature certificate chain in the first message; a third check is performed on the first message signature using the preset signature certificate chain if the result of the second check is successful; and a second temporary ECC public and private key pair is generated if the result of the third check is successful. Wherein the second temporary ECC public and private key pair includes a second temporary ECC private key ECC_KRD_temp_priKey2 and a second temporary ECC public key ECC_KRD_temp_pubKey2.

S863, session key negotiation is performed via the key receiving device end using the ECDH key negotiation algorithm based on the second temporary ECC private key and the first temporary ECC public key in the first message, so as to obtain the first key receiving device end session key.

S87, the temporary certificate chain is acquired via the key receiving device end, and a first key check value (KCV) is calculated using the first key receiving device end session key.

S88, a second message is generated via the key receiving device end according to the second temporary ECC public key, the temporary certificate chain, and the first key check value, and the second message is signed using the first ECC private key so as to obtain a second message signature.

S89, the second message, the second random number, and the second message signature are sent via the key receiving device end to the key distribution host end.

S810, a session key negotiation is performed via the key distribution host end using the ECDH key negotiation algorithm based on the second random number, the second message, and the second message signature to obtain a first key distribution host end session key.

Specifically, a first check is performed via the key distribution host end on the second random number; a second check is performed on the second message signature using the temporary certificate chain if the result of the first check is successful; and a session key negotiation is performed using the ECDH key negotiation algorithm based on the first temporary ECC private key and the second temporary ECC public key in the second message if the result of the second check is successful, so as to obtain a first key distribution host end session key.

S811, a second key check value is calculated via the key distribution host end using the first key distribution host end session key; the second key check value is compared with the first key check value in the second message; and a first integrated message is generated via the key distribution host end according to the first random number, the first message, the first message signature, the second message, and the second message signature if the result of the comparison is consistent.

S812, MAC calculation is performed via the key distribution host end on the first integrated message using the first key distribution host end session key to obtain a first MAC result, and the first MAC result is sent to the key receiving device end.

S813, a second integrated message is generated via the key receiving device end according to the first random number, the first message, the first message signature, the second message, and the second message signature, and MAC calculation is performed on the second integrated message using the first key receiving device end session key to obtain a second MAC result.

S814, the second MAC result is compared via the key receiving device end with the first MAC result, and it is determined that the establishment of the financial security channel between the key distribution host end and the key receiving device end is successful if the result of the comparison is consistent.

S9, a financial certificate download request is sent via the key receiving device end to the key distribution host end based on the session key, and the step specifically includes S91-S92.

S91, a third random number and certificate request configuration information are generated via the key receiving device end, and a financial certificate download request is generated according to the second random number, the third random number, and the certificate request configuration information.

Wherein the certificate request configuration information includes a certificate number, a key system number, a key **ID,** a key use and a key algorithm, etc.

S92, MAC calculation is performed via the key receiving device end on the financial certificate download request using the first key receiving device end session key to obtain a third MAC result, and the third MAC result is sent to the key distribution host end.

S10, a financial certificate is generated via the key distribution host end based on the financial certificate download request, and the financial certificate is sent to the key receiving device end; and the step specifically includes S101-S102.

S101, the second random number in the third MAC result is verified via the key distribution host end; the third random number in the third MAC result is saved if the result of the verification is successful; and a financial certificate is generated according to the certificate request configuration information in the third MAC result in a first preset format. The generated financial certificate includes the information in the certificate request configuration information. S102, the financial certificate and the third random number are sent via the key distribution host end to the key receiving device end.

S11, the third random number is verified via the key receiving device end, and the financial certificate is saved if the result of the verification is successful.

S12, a session key negotiation is performed between the key distribution host end and the key receiving device end using the ECDH key negotiation algorithm based on the financial certificate to obtain a second session key so as to establish a financial secure channel between the key distribution host end and the key receiving device end, wherein the second session key includes a second key receiving device end session key and a second key distribution host end session key; and the step specifically includes S121-S1214.

S121, a fifth random number is generated via the key receiving device end, and the fifth random number is sent to the key distribution host end.

S122, the fifth random number is saved via the key distribution host end, and a sixth random number is generated.

In an alternative embodiment, when the fifth random number is sent by the key receiving device end to the key distribution host end, parameters, such as an ECC algorithm suite, an ECC curve list, and a signature block algorithm are also sent to the key distribution host end. When the sixth random number is generated by the key distribution host end, parameters such as a supported ECC algorithm suite, an ECC curve, and a signature block algorithm are also selected, and then data is generated by using these selected parameters.

S123, a third temporary ECC public and private key pair is generated via the key distribution host end, wherein the third temporary ECC public and private key pair includes a third temporary ECC public key and a third temporary ECC private key.

S124, a third message is generated via the key distribution host end according to the third temporary ECC public key, a preset signature certificate chain, the fifth random number, and the sixth random number; and the third message is signed using a signature certificate private key in the preset signature certificate chain so as to obtain a third message signature.

S125, the third message and the third message signature are sent via the key distribution host end to the key receiving device end.

S126, a session key negotiation is performed via the key receiving device end using the ECDH key negotiation algorithm based on the third message and the third message signature so as to obtain a second key receiving device end session key, and the step specifically includes S1261-S1263.

S1261, a first check is performed via the key receiving device end on the fifth random number in the third message, and the sixth random number is saved if the result of the first check is successful.

S1262, a second check is performed via the key receiving device end on the preset signature certificate chain in the third message; a third check is performed on the third message signature using the preset signature certificate chain if the result of the second check is successful; and a fourth temporary ECC public and private key pair is generated if the result of the third check is successful. Wherein the fourth temporary ECC public and private key pair includes a fourth temporary ECC private key and a fourth temporary ECC public key.

S1263, session key negotiation is performed via the key receiving device end using the ECDH key negotiation algorithm based on the fourth temporary ECC private key and the third temporary ECC public key in the third message, so as to obtain the second key receiving device end session key.

S127, a signature certificate chain in the financial certificate is acquired via the key receiving device end, and a third key check value is calculated using the second key receiving device end session key.

S128, a fourth message is generated via the key receiving device end according to the fourth temporary ECC public key, the signature certificate chain in the financial certificate, and the third key check value; and the fourth message is signed using the first ECC private key to obtain a fourth message signature.

S129, the fourth message, the sixth random number, and the fourth message signature are sent via the key receiving device end to the key distribution host end.

S1210, a session key negotiation is performed via the key distribution host end using the ECDH key negotiation algorithm based on the sixth random number, the fourth message, and the fourth message signature to obtain a second key distribution host end session key.

Specifically, a first check is performed via the key distribution host end on the sixth random number; a second check is performed on the second message signature using a signature certificate chain in the financial certificate if the result of the first check is successful; and a session key negotiation is performed using the ECDH key negotiation algorithm based on the third temporary ECC private key and the fourth temporary ECC public key in the fourth message if the result of the second check is successful, so as to obtain a second key distribution host end session key.

S1211, a fourth key check value is calculated via the key distribution host end using the second key distribution host end session key; the fourth key check value is compared with the third key check value in the fourth message; and a third integrated message is generated via the key distribution host end according to the fifth random number, the third message, the third message signature, the fourth message, and the fourth message signature if the result of the comparison is consistent.

S1212, MAC calculation is performed via the key distribution host end on the third integrated message using the second key distribution host end session key to obtain a fifth MAC result, and the fifth MAC result is sent to the key receiving device end.

S1213, a fourth integrated message is generated via the key receiving device end according to the fifth random number, the third message, the third message signature, the fourth message, and the fourth message signature, and MAC calculation is performed on the fourth integrated message using the second key receiving device end session key to obtain a sixth MAC result.

S1214, the sixth MAC result is compared via the key receiving device end with the fifth MAC result, and it is determined that the establishment of the financial security channel between the key distribution host end and the key receiving device end is successful if the result of the comparison is consistent. That is to say, before the financial certificate is downloaded, a financial security channel between the key distribution host end and the key receiving device end is established once, and before the financial key is downloaded, a financial security channel between the key distribution host end and the key receiving device end is established once again. The difference between the establishing steps of S12 and S8 is that a signature certificate chain downloaded in the financial certificate download stage is used in S12, and a temporary certificate chain is used in S8.

S13, a financial key download request is sent via the key receiving device end to the key distribution host end based on the second session key and the financial certificate, and the step specifically includes S131-S133.

S131, a fourth random number is generated via the key receiving device end.

S132, a financial key download request is generated via the key receiving device end according to the second random number, the fourth random number, a key ID in the financial certificate, and a key system number, and MAC calculation is performed on the financial key download request based on the second session key to obtain a fourth MAC result.

Wherein the step of performing MAC calculation on the financial key download request based on the second session key to obtain a fourth MAC result includes:
MAC calculation is performed on the financial key download request using the second key receiving device end session key to obtain a fourth MAC result.

S133, the MAC result is sent via the key receiving device end to the key distribution host end. S14, a financial key is generated via the key distribution host end based on the financial key download request, and the financial key is sent to the key receiving device end, and the step specifically includes S141-S142.

S141, the second random number in the fourth MAC result is verified via the key distribution host end; the fourth random number in the fourth MAC result is saved if the result of the verification is successful; and a financial key is generated according to the key ID and a key system number in the fourth MAC result in a second preset format.

S142, the financial key and the fourth random number are sent via the key distribution host end to the key receiving device end.

S15, the fourth random number is verified via the key receiving device end, and the financial key is saved if the result of the verification is successful.

Wherein the key receiving device end can acquire key information including a key algorithm, a key storage area, and a key use, etc. by parsing the financial key.

In an alternative embodiment, if there is a failure in any of the checks or the verifications, and if there is an inconsistency in any of the comparisons, the flow is ended.

Referring to FIG 2, the second embodiment of the present invention is as follows.

A financial certificate and financial key download system, including a key distribution host end and a key receiving device end, wherein the key distribution host end includes a first memory, a first processor, and a first computer program stored in the first memory and operable on the first processor, and the key receiving device end includes a second memory, a second processor and a second computer program stored in the second memory and operable on the second processor, wherein the first processor, when executing the first computer program, realizes the steps executed by the key distribution host end in the financial certificate and financial key download method described above; and
the second processor, when executing the second computer program, realizes the steps executed by the key receiving device end in the financial certificate and financial key download method described above.

In summary, the present invention provides a financial certificate and financial key download method and system. By performing a session key negotiation between a key distribution host end and a key receiving device end using an ECDH key negotiation algorithm to obtain a first session key so as to establish a financial security channel between the two; sending, via the key receiving device end, a financial certificate download request to the key distribution host end based on the first session key; generating, via the key distribution host end, a financial certificate based on the financial certificate download request, and sending the financial certificate to the key receiving device end; performing a session key negotiation between the key distribution host end and the key receiving device end again based on the financial certificate to obtain a second session key so as to establish a financial secure channel between the two; sending, via the key receiving device end, a financial key download request to the key distribution host end based on the second session key and the financial certificate; and generating, via the key distribution host end, a financial key based on the financial key download request, and sending the financial key to the key receiving device end, thereby establishing financial security channels between the key distribution host end and the key receiving device end twice through the ECDH key negotiation algorithm, so as to realize two-way authentication before the financial certificate and the financial key are downloaded; and then subsequent financial certificate download and financial key download can be performed based on the session key obtained by establishing a secure channel, thereby improving the security of the financial certificate and financial key download. Further, the financial certificate is generated by the key distribution host end only after successfully verifying the second random number in the third MAC result, and after the key receiving device end receives same, the financial certificate is verified together with the third random number and saved only after the verification is successful, which improves the security of financial certificate generation and download. **In** addition, after the fourth MAC result is verified by the key distribution host end, the financial key is generated according to the key ID and the key system number in the fourth MAC result in the second preset format; then, the financial key and the fourth random number are sent to the key receiving device end; the fourth random number is verified by the key receiving device end, and the financial key is saved after the verification is successful, which improves the security of financial key generation and download.

The above is only the embodiment of the present invention, and does not limit the patent scope of the present invention. Any equivalent transformation made by using the description and drawings of the present invention, or directly or indirectly applied in relevant technical fields, is equally included in the patent protection scope of the present invention.

## Claims

1. A financial certificate and financial key download method, **characterized by** comprising the following steps:
performing a session key negotiation between a key distribution host end and a key receiving device end using an Elliptic Curve Diffie-Hellman, ECDH, key negotiation algorithm to obtain a first session key so as to establish a financial security channel between the key distribution host end and the key receiving device end;
sending, via the key receiving device end, a financial certificate download request to the key distribution host end based on the first session key;
generating, via the key distribution host end, a financial certificate based on the financial certificate download request, and sending the financial certificate to the key receiving device end;
performing a session key negotiation between the key distribution host end and the key receiving device end using the ECDH key negotiation algorithm based on the financial certificate to obtain a second session key so as to establish a financial secure channel between the key distribution host end and the key receiving device end; sending, via the key receiving device end, a financial key download request to the key distribution host end based on the second session key and the financial certificate; and
generating, via the key distribution host end, a financial key based on the financial key download request, and sending the financial key to the key receiving device end.

2. The financial certificate and financial key download method according to claim 1, **characterized by** further comprising, before the step of performing a session key negotiation between a key distribution host end and a key receiving device end using an ECDH key negotiation algorithm to obtain a first session key:
sending, via the key distribution host end, a creation instruction for a certificate signature request file to the key receiving device end;
generating, via the key receiving device end, a first Elliptic Curve Cryptography, ECC, public and private key pair according to the creation instruction;
storing, via the key receiving device end, the first ECC public and private key pair as a temporary variable, and generating a certificate signature request file according to the first ECC public and private key pair;
sending, via the key receiving device end, the certificate signature request file to the key distribution host end;
sending, via the key distribution host end, the certificate signature request file to a certificate authority, CA;
receiving, via the key distribution host end, a digital certificate generated by the CA according to the certificate signature request file, and sending the digital certificate to the key receiving device end; and
obtaining, via the key receiving device end, a signature certificate chain according to the digital certificate, and storing the signature certificate chain as a temporary variable.

3. The financial certificate and financial key download method according to claim 2, **characterized in that** the first ECC public and private key pair comprises a first ECC private key; the step of performing a session key negotiation between a key distribution host end and a key receiving device end using an ECDH key negotiation algorithm to obtain a first session key so as to establish a financial security channel between the key distribution host end and the key receiving device end comprises:
generating, via the key receiving device end, a first random number, and sending the first random number to the key distribution host end;
saving, via the key distribution host end, the first random number, and generating a second random number;
generating, via the key distribution host end, a first temporary ECC public and private key pair,
wherein the first temporary ECC public and private key pair comprises a first temporary ECC public key and a first temporary ECC private key;
generating, via the key distribution host end, a first message according to the first temporary ECC public key, a preset signature certificate chain, the first random number, and the second random number, and signing the first message using a signature certificate private key in the preset signature certificate chain so as to obtain a first message signature;
sending, via the key distribution host end, the first message and the first message signature to the key receiving device end;
performing, via the key receiving device end, a session key negotiation using the ECDH key negotiation algorithm based on the first message and the first message signature so as to obtain a first key receiving device end session key;
acquiring, via the key receiving device end, the temporary certificate chain, and calculating a first key check value using the first key receiving device end session key;
generating, via the key receiving device end, a second message according to the second temporary ECC public key, the temporary certificate chain, and the first key check value, and
signing the second message using the first ECC private key so as to obtain a second message signature;
sending, via the key receiving device end, the second message, the second random number, and the second message signature to the key distribution host end;
performing, via the key distribution host end, a session key negotiation using the ECDH key negotiation algorithm based on the second random number, the second message, and the second message signature to obtain a first key distribution host end session key;
calculating, via the key distribution host end, a second key check value using the first key distribution host end session key, and comparing the second key check value with the first key check value in the second message, and generating, via the key distribution host end, a first integrated message according to the first random number, the first message, the first message signature, the second message, and the second message signature if the result of the comparison is consistent;
performing, via the key distribution host end, message authentication code, MAC, calculation on the first integrated message using the first key distribution host end session key to obtain a first MAC result, and sending the first MAC result to the key receiving device end;
generating, via the key receiving device end, a second integrated message according to the first random number, the first message, the first message signature, the second message, and the second message signature, and performing MAC calculation on the second integrated message using the first key receiving device end session key to obtain a second MAC result; and
comparing, via the key receiving device end, the second MAC result with the first MAC result, and determining that the establishment of the financial security channel between the key distribution host end and the key receiving device end is successful if the result of the comparison is consistent.

4. The financial certificate and financial key download method according to claim 3, **characterized in that** the step of performing, via the key receiving device end, a session key negotiation using the ECDH key negotiation algorithm based on the first message and the first message signature so as to obtain a first key receiving device end session key comprises:
performing, via the key receiving device end, a first check on the first random number in the first message, and saving the second random number if the result of the first check is successful;
performing, via the key receiving device end, a second check on the preset signature certificate chain in the first message, performing a third check on the first message signature using the preset signature certificate chain if the result of the second check is successful, and generating a second temporary ECC public and private key pair if the result of the third check is successful, wherein the second temporary ECC public and private key pair comprises a second temporary ECC private key and a second temporary ECC public key; and
performing, via the key receiving device end, session key negotiation using the ECDH key negotiation algorithm based on the second temporary ECC private key and the first temporary ECC public key in the first message, so as to obtain the first key receiving device end session key.

5. The financial certificate and financial key download method according to claim 3, **characterized in that** the step of performing, via the key distribution host end, a session key negotiation using the ECDH key negotiation algorithm based on the second random number, the second message, and the second message signature to obtain a first key distribution host end session key, comprises:
performing, via the key distribution host end, a first check on the second random number, performing a second check on the second message signature using the temporary certificate chain if the result of the first check is successful, and performing a session key negotiation using the ECDH key negotiation algorithm based on the first temporary ECC private key and the second temporary ECC public key in the second message if the result of the second check is successful, so as to obtain the first key distribution host end session key.

6. The financial certificate and financial key download method according to claim 3, **characterized in that** the step of sending, via the key receiving device end, a financial certificate download request to the key distribution host end based on the session key comprises:
generating, via the key receiving device end, a third random number and certificate request configuration information, and generating a financial certificate download request according to the second random number, the third random number, and the certificate request configuration information; and
performing, via the key receiving device end, MAC calculation on the financial certificate download request using the first key receiving device end session key to obtain a third MAC result, and sending the third MAC result to the key distribution host end.

7. The financial certificate and financial key download method according to claim 6, **characterized in that** the step of generating, via the key distribution host end, a financial certificate based on the financial certificate download request, and sending the financial certificate to the key receiving device end comprises:
verifying, via the key distribution host end, the second random number in the third MAC result, saving the third random number in the third MAC result if the result of the verification is successful, and generating a financial certificate according to the certificate request configuration information in the third MAC result in a first preset format;
sending, via the key distribution host end, the financial certificate and the third random number to the key receiving device end;
after the step of generating, via the key distribution host end, a financial certificate based on the financial certificate download request, and sending the financial certificate to the key receiving device end, it further comprises:
verifying, via the key receiving device end, the third random number, and saving the financial certificate if the result of the verification is successful.

8. The financial certificate and financial key download method according to claim 3, **characterized in that** the step of sending, via the key receiving device end, a financial key download request to the key distribution host end based on the second session key and the financial certificate comprises:
generating, via the key receiving device end, a fourth random number;
generating, via the key receiving device end, a financial key download request according to the second random number, the fourth random number, a key identifier, **ID,** in the financial certificate, and a key system number, and performing MAC calculation on the financial key download request based on the second session key to obtain a fourth MAC result; and
sending, via the key receiving device end, the MAC result to the key distribution host end.

9. The financial certificate and financial key download method according to claim 8, **characterized in that** the step of generating, via the key distribution host end, a financial key based on the financial key download request, and sending the financial key to the key receiving device end comprises:
verifying, via the key distribution host end, the second random number in the fourth MAC result, saving the fourth random number in the fourth MAC result if the result of the verification is successful, and generating a financial key according to the key ID and a key system number in the fourth MAC result in a second preset format;
sending, via the key distribution host end, the financial key and the fourth random number to the key receiving device end;
after the step of generating, via the key distribution host end, a financial key based on the financial key download request, and sending the financial key to the key receiving device end, it further comprises:
verifying, via the key receiving device end, the fourth random number, and saving the financial key if the result of the verification is successful.

10. A financial certificate and financial key download system, **characterized by** comprising a key distribution host end and a key receiving device end, wherein the key distribution host end comprises a first memory, a first processor, and a first computer program stored in the first memory and operable on the first processor, and the key receiving device end comprises a second memory, a second processor and a second computer program stored in the second memory and operable on the second processor, **characterized in that** the first processor, when executing the first computer program, realizes the steps executed by the key distribution host end in the financial certificate and financial key download method according to any one of claims 1-9; and
the second processor, when executing the second computer program, realizes the steps executed by the key receiving device end in the financial certificate and financial key download method according to any one of claims 1-9
